(19) Europäisches Patentamt
European Patent Office
Office européen des brevets

(11) Veröffentlichungsnummer: **0 001 425**
**B1**

(12) **EUROPÄISCHE PATENTSCHRIFT**

(21) Anmeldenummer: **78100981.6**

(22) Anmeldetag: **25.09.78**

(51) Int. Cl.³: **B 01 J 23/46,**
C 07 C 85/24

(54) **Ruthenium-Trägerkatalysator, Verfahren zu seiner Herstellung und seine Verwendung als Hydrierkatalysator**

(30) Priorität: **07.10.77 DE 2745172**

(43) Veröffentlichungstag der Anmeldung:
**18.04.79 Patentblatt 79/08**

(45) Bekanntmachung des Hinweises auf die Patenterteilung:
**20.08.80 Patentblatt 80/17**

(84) Benannte Vertragsstaaten:
**BE CH DE FR GB NL**

(56) Entgegenhaltungen:
**DE - A - 2 125 790**
**FR - A - 2 298 529**
**US - A - 3 636 108**
**US - A - 3 697 449**

(73) Patentinhaber: **Bayer AG**
**Zentralbereich Patente, Marken und Lizenzen**
**D - 5090 Leverkusen 1, Bayerwerk (DE)**

(72) Erfinder: **Weissel, Oskar, Dr.**
**Deswatinesstrasse 70**
**D - 4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 425 B1

# Ruthenium-Trägerkatalysator, Verfahren zu seiner Herstellung und seine Verwendung als Hydrierkatalysator.

Die Erfindung betrifft einen Ruthenium-Trägerkatalysator, ein Verfahren zu seiner Herstellung und seine Verwendung als Hydrierkatalysator.

Aus der DT—OS 2 502 894 ist ein Ruthenium-Trägerkatalysator bekannt, dessen Katalysatorträger aus Hydroxiden und/oder Oxidhydraten des Chroms und Mangans und/oder deren Dehydratisierungsprodukten besteht, sowie ein Verfahren zur Herstellung des Ruthenium-Trägerkatalysators.

Die Herstellung dieses Katalysators erfolgt zweckmäßigerweise in zwei Stufen, wobei in der ersten Stufe zunächst der Katalysatorträger, z.B. durch gemeinsames Ausfällen eines Chrom-Mangan-Hydroxidgemisches aus einer Chrom-und Mangansalze enthaltenden Lösung und anschließendes Auswaschen der löslichen Anteile mit Wasser oder aber durch Umsetzung von frisch gefälltem Magancarbonat mit Ammoniumbichromat in wäßrigem Medium bei 70 bis 100°C hergestellt wird und in der zweiten Stufe, gegebenenfalls nach einer Temperaturbehandlung des Trägers, das Ruthenium auf diesen aufgebracht wird.

Daneben wird in der gleichen DT—OS die Verwendung des Katalysators zur katalytischen Hydrierung aromatischer Amine beschrieben.

Aus der US—PS 3 636 108 ist ein Verfahren zur katalytischen Hydrierung aromatischer Amine bekannt, wobei man einen Ruthenium-Trägerkatalysator verwendet, der mit Alkali modifiziert ist.

Der Katalysator kann einen Gehalt an Alkalimetall von 0,1% bis 15 Gew.-% aufweisen. Die Modifizierung des Katalysators mit Alkaliverbindungen kann auf verschiedene Art and Weise erfolgen, z.B. durch Behandlung des Katalysators mit einer Lösung einer Alkaliverbindung.

Als Katalysatorträger werden die bekannten Trägermaterialien, wie Aluminiumoxid, Kieselgur, Bariumsulfat, Kohlenstoff, Calciumcarbonat, die Oxide und Carbonate der seltenen Erdmetalle sowie Mischungen der Oxide und Carbonate der seltenen Erdmetalle, verwendet (vgl. Spalte 5, Zeilen 19 bis 33).

Um hohe Ausbeuten an Hydrierungsprodukt zu erzielen, ist es erforderlich, den Ruthenium-Trägerkatalysator mit Alkaliverbindungen zu modifizieren (vgl. Beispiel 13 und 14 der US—PS 3 636 108).

Nachteilig bei dem in der US—PS 3 636 108 beschriebenen Katalysator ist seine ungenügende Aktivität, so daß sehr große Katalysatormengen (bis zu 10 Gew.-%, bezogen auf die zu hydrierende Substanz, vgl. Beispiele 2, 10, 20, 22 der US—PS) sowie Katalysatoren mit hohem Rutheniumgehalt (5%, vgl. Beispiele 1—46 der US—PS) nötig sind, um hohe Ausbeuten an Hydrierungsprodukt zu erzielen.

Nachteilig ist ferner, daß man bei ihrem Einsatz in stückiger Form nur ungenügende Ausbeuten erreicht und daß ihre Lebensdauer gering ist (siehe Vergleichsbeispiele 11 und 13).

Es wurde nun ein Ruthenium-Trägerkatalysator, dessen Katalysatorträger aus Hydroxiden und/oder Oxidhydraten des Chroms und Mangans und/oder deren Dehydratisierungsprodukten besteht, gefunden, der dadurch gekennzeichnet ist, daß de Alkalioxide, -hydroxide, -alkoholate, -carbonate, -hydrogencarbonate, Alkalisalze niederer Carbonsäuren mit bis zu 7 C-Atomen und/oder deren Umsetzungsprodukte mit den im Katalysator enthaltenen Chrom- und Manganverbindungen enthält und wobei der Gehalt an Alkaliverbindungen, als Oxid gerechnet, 0,05 bis 15 Gew.-% beträgt.

Als Alkalioxide, -hydroxide, -alkoholate, -carbonate, -hydrogencarbonate, Alkalisalze niederer Carbonsäuren mit bis zu 7 C-Atomen seien genannt: Lithiumhydroxid, Natriumhydroxid, Natriumcarbonat, Natriumhydrogencarbonat, Natriummethylat, Natriumethylat, Natriumacetat, Kaliumoxid, Kaliumhydroxid, Kaliumcarbonat, Kaliummethylat, Rubidiumhydroxid; weiterhin deren Umsetzungsprodukte mit den im Katalysator enthaltenen Chrom- und Manganverbindungen.

Der Gehalt des erfindungsgemäßen Katalysators an Alkaliverbindungen, als Oxide gerechnet, beträgt vorzugsweise 0,1 bis 10 Gew.-%, besonders bevorzugt 0,2 bis 8,0 Gew.-%.

Der Ruthenium-Gehalt des Katalysators, berechnet als Ruthenium, beträgt im allgemeinen 0,1 bis 10 Gew.-%, bevorzugt 0,5 bis 5 Gew.-%, bezogen auf den Trägerkatalysator.

Das Gewichtsverhältnis der Elemente Mangan und Chrom zueinander beträgt beim Katalysatorträger im allgemeinen 0,2:1 bis 5:1, bevorzugt 0,5:1 bis 3:1, insbesondere 0,8:1 bis 2:1.

Die Herstellung des erfindungsgemäßen Katalysators kann nach an sich bekannten Methoden vorgenommen werden.

Sie kann z.B. so erfolgen, daß ein gemäß der DT—OS 2 502 894 hergestellter Ruthenium-Trägerkatalysator nach der Aufbringung des Rutheniums auf den Katalysatorträger mit einer Lösung bestehend aus anorganischen und/oder organischen Alkaliverbindungen behandelt und anschließend getrocknet wird.

In einer bevorzugten Ausführungsform wird die Herstellung des Katalysators so vorgenommen, daß auf einen Chrom und Mangan enthaltenden Katalysatorträger, der durch Umsetzung von frisch gefällten Mangan(II)-Verbindungen mit Chrom(VI)-Verbindungen in wäßrigem Medium bei etwa 50 bis etwa 100°C, anschließendes Trocknen bei etwa 120°C und Nachbehandlung bei etwa 200 bis 450°C gewonnen wird, zunächst aus wäßrigsaurer Rutheniumchloridlösung durch Fällung mit Alkalilaugen oder Alkalicarbonat-Lösungen Rutheniumhydroxid niedergeschlagen wird und anschließend der

Katalysator mit einer Lösung anorganischer und/oder organischer Alkaliverbindungen behandelt und dann getrocknet und gegebenenfalls mit Wasserstoff behandelt wird.

Der für die Herstellung des erfindungsgemäßen Katalysators verwendete Chrom und Mangan enthaltende Katalysatorträger kann in einer weiteren bevorzugten Herstellungsform auch aus Ammonium-Mangan-Chromaten, erhältlich durch Umsetzung von Mangan(II)-Salzen mit Ammoniumbichromat in wäßriger Lösung (s. z.B. Gmelins Handbuch der anorganischen Chemie, 8. Aufl., Mangan Teil C, Seite 198 bis 199), durch Erhitzen auf etwa 200 bis 450°C, vorzugsweise 250 bis 350°C, gewonnen werden. Erfindungsgemäß wird der Katalysator dann durch Abscheidung einer schwer löslichen Ruthenium-Verbindung, z.B. aus einer wäßrig-sauren Rutheniumchloridlösung, und anschließender Behandlung mit einer Lösung anorganischer und/oder organischer Alkaliverbindungen hergestellt.

Zur Behandlung des Ruthenium-Trägerkatalysators geeignete anorganische und/oder organische Alkaliverbindungen sind beispielsweise die Oxide, Hydroxide, Alkoholate und Alkalisalze solcher Säuren geeignet, die weder selbst noch in Form ihrer Reduktionsprodukte als Hydrierkatalysator-Gifte im Sinne der üblichen Formulierung (z.B. gemäß Zymalkowski, Katalytische Hydrierung, Seite 36, (1965); Houben-Weyl, Methoden der organischen Chemie, (1955), Bd. *4/2,* Seite 257) gelten, also insbesondere solche, die frei von N, P, As, Sb, S, Se, Te, Cl, Br, J sind, wie die Carbonate, Bicarbonate, Acetate und die Alkalisalze anderer niederer Carbonsäuren mit bis zu 7 C-Atomen. Zum Beispiel seien als Alkaliverbindungen genannt:

Lithiumhydroxid, Natriumhydroxid, Natriumcarbonat, Natriumhydrogencarbonat, Natriummethylat, Natriumäthylat, Natriumacetat, Kaliumoxid, Kaliumhydroxid, Kaliumcarbonat, Kaliummethylat, Rubidiumhydroxid.

Die Konzentration der Alkaliverbindungen in der verwendeten Lösung ist im allgemeinen etwa 0,02- bis 5-n, vorzugsweise 0,02- bis 2-n, insebesondere 0,1-bis 1-n.

Die Trocknung des Katalysators kann bei Temperaturen im Bereich von etwa 20 bis etwa 150°C, bevorzugt von bis 120°C vorgenommen werden.

Die Herstellung des erfindungsgemäßen Katalysators kann aber auch so erfolgen, daß in einer ersten Stufe ein Mangan, Chrom und eine anorganische und/oder organische Alkaliverbindung enthaltender Katalysatorträger hergestellt wird, auf dem dann in üblicher Weise in einer zweiten Stufe Ruthenium in schwer löslicher Form abgeschiedon wird.

Der Katalysatorträger kann dabei in einer bevorzugten Ausführungsform aus gemischten Mangan(II)-Chromaten, die als weitere Kationen Alkalimetall- und gegebenenfalls Ammoniumionen enthalten, durch Erhitzen auf Temperaturen von etwa 200 bis 450°C, vorzugsweise 250 bis 350°C, gewonnen werden.

Solche, noch Anteile von Alkali- und gegebenenfalls Ammoniumchromate enthaltende, gemischten Manganchromate können durch Fällungsreaktion in wäßrigem Milieu bei pH $\geq 6$ durch Zusammengeben von löslichen Mangansalzen mit Alkali-und gegebenenfalls Ammoniumverbindungen, von denen vorzugsweise ein Teil als Chromat oder Bichromat eingesetzt wird, hergestellt werden.

Als Chrom(VI)-Verbindung kann jedoch auch z.B. Chromtrioxid verwandt werden, wenn durch Auswahl entsprechender basischer Alkali- und Ammoniumverbindungen der für die Fällung notwendige pH-Wert eingestellt wird.

Zum Teil sind auf diese Weise (gemäß Gmelins Handbuch der anorganischen Chemie, 8. Aufl., Mangan Teil C, Seite 197 bis 198) definierte Alkali-Mangan-Doppelchromate, z.B. $KMn_2(CrO_4)_2OH \cdot H_2O$, herstellbar, die ebenfalls geeignete Ausgangsprodukte für die erfindungsgemäßen Katalysatoren darstellen.

Es ist jedoch nicht notwendig, solche definierten Doppelchromate herzustellen. Durch geeignete Einstellung des Alkaligehaltes zu dem der Ammoniumverbindung läßt sich im Gegenteil der Alkaligehalt in den Fällungsprodukten in weiten Grenzen variieren.

Der optimale Alkaligehalt für den jeweiligen Verwendungszweck läßt sich dabei leicht durch wenige Vorversuche ermitteln.

Der erfindungsgemäße Katalysator kann direkt nach dem Trocknen verwendet werden. Es kann jedoch auch vorteilhaft sein, ihn vor der Verwendung einer Behandlung mit Wasserstoff bei Temperaturen von etwa 20 bis etwa 200°C zu unterwerfen.

Die erfindungsgemäßen Katalysatoren sind insbesondere zur Herstellung cycloaliphatischer Amine durch Kernhydrierung entsprechender aromatischer Amine geeignet.

Als Ausgangsverbindungen für dieses Verfahren kommen Anilin und substituierte Aniline in Frage.

Damit kann dieses Verfahren zur katalytischen Kernhydrierung aromatischer Amine der Formel

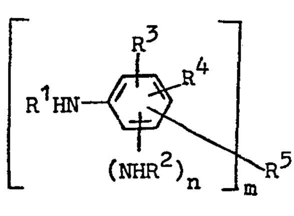

(I)

dienen, in der

$R^1$, $R^2$, $R^3$ und $R^4$ gleich oder verschieden sind und für Wasserstoff oder einen Alkylrest stehen,
n für die Zahlen 0 oder 1 und
m für die Zahlen 1, 2 oder 3 stehen sowie
$R^5$ je nach der Bedeutung von m für Wasserstoff oder einen gegebenenfalls substituierten ein-, zwei- oder dreiwertigen aliphatischen, cycloaliphatischen, araliphatischen oder aromatischen Rest steht.

Als Alkylreste $R^1$, $R^2$, $R^3$, $R^4$ seien geradkettige und verzweigte Alkylreste mit 1 bis 10 C-Atomen, bevorzugt mit bis zu 6 und insbesondere bis zu 4 C-Atomen, genannt, beispielsweise Methyl, Äthyl, Propyl, Isopropyl, Butyl, Isobutyl, tert.-Butyl, die isomeren Pentyl- und Hexylreste.

Als aliphatischer Rest $R^5$ sei ein geradkettiger und verzweigter Kohlenwasserstoffrest mit 1 bis 10 C-Atomen, bevorzugt mit bis zu 6 C-Atomen und insbesondere mit bis zu 3 C-Atomen, genannt, beispielsweise ein Methyl-, Methylen-, Methin-, Äthyl-, 1,1-Äthylen-, 1,2-Äthylen-, 1-Propyl-, 2-Propyl-, 2,2-Propylen-, 1-Butyl-, 2-Butyl-, tert.-Butyl-, 2-Methyl-1,4-butylen-, 1,1,3-Trimethyl-1,3-propylenrest bevorzugt ein Methylen- und 2,2-Propylenrest.

Als cycloaliphatischer Rest $R^5$ sei ein solcher mit bis zu 10 C-Atomen genannt, bevorzugt ein fünf- und sechsgliedriger Rest, z.B. ein Cyclopentyl-, Cyclopentyliden-, Cyclohexyl-, Cyclohexylidenrest.

Als araliphatischer Rest $R^5$ sei ein solcher mit bis zu 35 C-Atomen gennant, bevorzugt ein solcher mit bis zu 18 C-Atomen im aromatischen- und 9 C-Atome im aliphatischen Teil, insbesondere ein solcher, der ein oder zwei Benzolkerne enthält, beispielsweise ein Benzyl-, Benzyliden-, Phenyläthyl-, Phenylisopropyl-, Xylylen-, Phenylen-bis-isopropyl-, Methylen-bis-benzylrest.

Als aromatischer Rest $R^5$ sei ein solcher mit bis zu 14 C-Atomen genannt, vorzugsweise ein Phenyl-, Phenylen- und Naphthylrest, insbesondere ein Phenylrest.

Als Substituenten des gegebenenfalls substituierten Restes $R^5$ seien beispielsweise genannt: Alkylreste, die Aminogruppe und die Alkylaminogruppe, bei denen die Alkylreste die vorstehend angegebene Bedeutung haben.

Eine besondere Gruppe der Verbindungen der allgemeinen Formel I entspricht damit der Formel

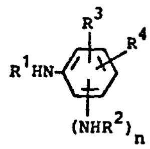

(II)

in der

$R^1$, $R^2$, $R^3$, $R^4$ und n die vorstehend angegebene Bedeutung besitzen.

Als Verbindungen der allgemeinen Formel II seien beispielsweise genannt:

Anilin, Alkylaniline wie o-, m-, und p-Toluidin, Xylidine wie 1,2,3-, 1,2,4-, 1,3,4- und 1,3,5-Xylidin, Äthyl-, Propyl-, Isopropyl-, Butyl-, Isobutyl-, tert.-Butyl- und durch höhere Alkylreste mit bis zu 10 C-Atomen substituierte Aniline; ferner N-Alkylaniline wie N-Methylanilin, N-Äthylanilin, N-Propylanilin, N-Isopropylanilin, die isomeren N-Butyl-, N-Pentyl- und N-Hexylaniline; o-, m- und p-Phenylendiamin, 2,4-Diaminotoluol, 2,6-Diaminotoluol.

Eine weitere Gruppe von Verbindungen der allgemeinen Formel I entspricht der Formel

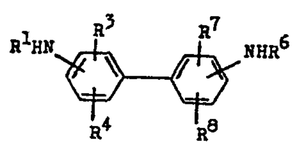

(III)

in der

$R^1$, $R^3$, $R^4$, $R^6$, $R^7$ und $R^8$ gleich oder verschieden sind und für Wasserstoff oder einen Alkylrest der vorstehend beschriebenen Bedeutung stehen.

Als Verbindungen der allgemeinen Formel III seien beispielsweise genannt: Benzidin und Tolidin.

Eine weitere bevorzugte Gruppe von Verbindungen der allgemeinen Formel I entsprichte der Formel

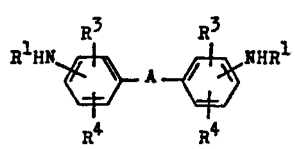

(VI)

in der

$R^1$, $R^2$, $R^3$ und $R^4$ die vorstehend genannte Bedeutung besitzen und
A für einen zweiwertigen aliphatischen oder cycloaliphatischen Rest mit bis zu 10 C-Atomen steht.

Als Verbindungen der allgemeinen Formel IV seien bevorzugt gennant:

4,4'-Diamino-diphenylmethan, 2,4'-Diamino-diphenylmethan, Bis-(4-methylamino-phenyl)-methan, 3,3',5,5'-Tetramethyl-4,4'-diamino-diphenylmethan, 3,3',5,5'-Tetraäthyl-4,4'-diamino-diphenylmethan, 2,2-Bis-(4-aminophenyl)-propan, 1,1-Bis-(4-aminophenyl)-cyclohexan, 1,3-Bis-(4-aminophenyl)-1,1,3-trimethyl-propan.

Eine weitere bevorzugte Gruppe von Ausgangsverbindungen der allgemeinen Formel I entspricht dabei der Formel

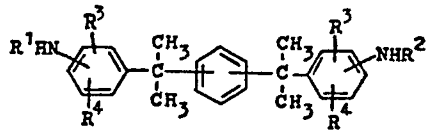

(V)

in der

$R^1$, $R^2$, $R^3$ und $R^4$ die vorstehend angegebene Bedeutung haben.

Als Verbindungen der Formel V seien bevorzugt genannt:

$\alpha,\alpha'$-Bis-(4-aminophenyl)-m-diisopropylbenzol, $\alpha,\alpha$-Bis-(4-aminophenyl)-p-diisopropylbenzol, $\alpha,\alpha'$-Bis-(4-methylaminophenyl)-p-diisopropylbenzol, $\alpha,\alpha$-Bis-(4-methylaminophenyl)-m-diisopropylbenzol, sowie Gemische der vorgenannten isomeren Verbindungen.

Eine besondere Gruppe substituierter Aniline der Formel I entspricht dabei der allgemeinen Formel IV

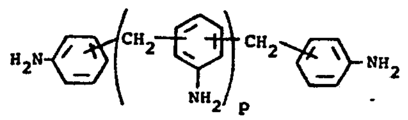

(VI),

in welcher

p für die Zahlen 0 oder 1 steht.

Verbindungen der allgemeinen Formel VI sind z.B. Diaminodiphenylmethan und Di-(aminobenzyl)-anilin.

Diese werden in der chemischen Industrie im großen Maßstab durch Kondensation von Anilin mit Formaldehyd hergestellt. Dabei fallen diese stets im Gemisch miteinander und gegebenenfalls vergesellschaftet mit vier- und höherkernigen Polyaminen an.

Ihre Abtrennung aus den rohen Reaktionsgemischen in einer für die bisher bekannten Hydrierverfahren ausreichenden Reinheit ist zwar grundsätzlich möglich. Sie ist jedoch aufwendig und verlustreich.

Überraschenderweise wurde nun gefunden, daß die Herstellung cycloaliphatischer Amine gemäß dem erfindungsgemäßen Verfahren nicht nur beim Einsatz der reinen, definierten Verbindungen der Formel VI möglich ist, sondern in hervorragenden Ausbeuten auch gelingt, wenn man sie im Gemisch miteinander, in Form roher Kondensationsprodukte von Anilin mit Formaldehyd, ohne vorherige Auftrennung in einzelne Bestandteile und ohne weitere Reinigung, einsetzt.

Die Zusammensetzung der Kondensationsprodukte kann in weiten Grenzen schwanken. Im allgemeinen werden jedoch solche Ausgansprodukte verwendet, deren Zweikernanteil (p = 0) größer als 50 Gew.-% und deren Anteil an 4- und höherkernigen Verbindungen (p = 2 bis 5) geringer als 30 Gew.-% ist.

Bevorzugt werden solche Ausgangsprodukte verwendet, deren Zweikernanteil (p = 0) über 60 Gew.-% und deren Anteil an 4- und höherkernigen Verbindungen (p = 2 bis 5) unter 15 Gew.-% liegt. Die Ausgangsprodukte können Verunreinigungen an Stoffen, wie sie üblicherweise bei der Kondensation von Anilin mit Formaldehyd auftreten können, z.B. Anilin selbst, Aminobenzylanilin, Wasser und Natriumchlorid, in geringen Mengen enthalten.

Im allgemeinen wird das erfindungsgemäße Verfahren bei Temperaturen im Bereich von etwa 150°C bis etwa 350°C, vorzugsweise im Temperaturbereich von etwa 180°C bis 300°C durchgeführt.

Üblicherweise wird das erfindungsgemäße Verfahren bei erhöhtem Wasserstoffdruck durchgeführt, wobei ein Druck oberhalb 100 bar vorteilhaft ist. Vorzugsweise wird im Druckbereich von etwa 150 bis 1000 bar gearbeitet.

Im allgemeinen wird das erfindungsgemäße Verfahren in Abwesenheit von Lösungsmitteln durchgeführt.

Das erfindungsgemäße Verfahren gestattet es, sehr kleine Katalysatormengen einzusetzen. Im allgemeinen wird der Katalysator in einer Menge verwendet, deren Rutheniumgehalt etwa 0,001 bis 0,5 g, vorzugsweise etwa 0,005 bis 0,2 g, insbesondere 0,01 bis 0,1 g, pro kg des zu hydrierenden Ausgangsproduktes beträgt.

Es war überraschend, daß diese selbst für die Kernhydrierung reiner, einheitlicher Verbindungen geringe Katalysatormenge für die Hydrierung von verunreinigten Rohprodukten ausreicht, da bekannt ist, daß die Hydrierung ungereinigter Produkte erschwertz ist und entweder gar nich oder nur durch Einsatz

großer Katalysatormengen möglich ist (Houben-Weyl, Methoden der organischen Chemie, Bd. 4/2, S. 256—258).

Das erfindungsgemäße Verfahren kann sowohl diskontinuierlich als auch kontinuierlich in üblicher Weise durchgeführt werden, z.B. als Sumpfphasenrfahren mit pulverförmigem Katalysator im Rührautoklaven oder nach dem Rieselphasenprinzip mit stückigem Katalysator im Reaktionsrohr.

Man kann die Reaktion dabei so leiten, daß bei mehrkernigen aromatischen Verbindungen alle oder nur ein Teil der aromatischen Kerne hydriert werden.

Die Hydrierung der 2-kernigen Verbindungen gelingt dabei verhältnismäßig leichter als die der höherkernigen, so daß es gegebenenfalls möglich ist, die Hydrierung auf der gewünschten Stufe zu stoppen.

Die hydrierten Produkte stellen im allgemeinen farblose, je nach Art, Anzahl und Konzentration der Komponenten kristalline, breiige oder flüssige Substanzen dar.

Die perhydrierten Produkte aus Produktgemischen der allgemeinen Formel VI sind im allgemeinen wasserhelle, viskose Flüssigkeiten, die bei Zweikerngehalten unter 70 Gew.-% bei Raumtemperatur nicht mehr kristallisieren.

Sie sind in der so anfallenden Form zum Teil ohne weitere Reinigung verwendbar, z.B. als Härter für Epoxidharze oder als wertvolle Zwischenprodukte zur Herstellung von Polykondensationskunststoffen.

Es ist jedoch auch ohne Schwierigkeiten möglich, z.B. durch fraktionierte Destillation, die Hydrierungsprodukte in definierte zweikernige, dreikernige und höherkernige Fraktionen aufzutrennen, wodurch z.B. eine besonders wirtschaftliche Quelle für das Diaminodicyclohexylmethan erschlossen wird.

4,4'-Diaminodicyclohexylmethan hat beispielsweise schon zahlreiche Anwendungen in der Kunststoff- und Faserchemie gefunden (DT—OSen 1 593 238, 1 768 535, 1 810 924, 1 918 098, 1 933 866; Chem.Ind. XXII (Mai 1970), S 343).

Der erfindungsgemäße Katalysator zeichnet sich durch eine hohe Selektivität und eine große katalytische Stabilität aus.

Die hohe Selektivität des erfindungsgemäßen Katalysators, die sich in hohen Ausbeuten und einem sehr geringen Anteil an Nebenreaktionen niederschlägt, macht sich besonders deutlich dort bemerkbar, wo der Katalysator in stückiger Form eingesetzt wird, z.B. nach dem besonders wirtschaftlich arbeitenden Rieselverfahren.

Ein weiterer Vorzug des erfindungsgemäßen Katalysators ist, daß die hohe Selektivität auch bei hohen Temperaturen, z.B. bei solchen um 300°C, weitgehend erhalten bleibt. Dies erlaubt zum einen hohe Katalysatorbelastungen, zum anderen läßt es auch Betriebsweisen mit hohen Temperaturtoleranzen zu.

Die erhöhte katalytische Stabilität des erfindungsgemäßen Katalysators hat insbesondere eine über lange Zeit gleichbleibende Wirkungsweise des Katalysators zur Folge, was einen besonders wirtschaftlichen Betrieb ermöglicht.

Die nachfolgenden Beispiele sollen das erfindungsgemäße Verfahren verdeutlichen ohne es jedoch auf diese Beispiele zu beschränken.

## Beispiel 1

Eine Lösung von 3000 g $MnSO_4.H_2O$ in 15 l Wasser wird im Laufe von etwa 10 Minuten unter Rühren mit einer Lösung von 2500 g Natriumcarbonat in 10 l Wasser versetzt. Der ausgefallene Niederschlag wird sulfatfrei gewaschen, in 10 l Wasser suspendiert und unter Rühren auf 85°C erhitzt. Zu dieser Suspension läßt man bei 85°C eine Lösung von 5350 g Ammoniumbichromat in 7000 ml Wasser laufen und rührt noch 3 Stunden bei 85°C nach. Nach dem Erkalten wird der dunkle Niederschlag abgenutscht, mit wenig Wasser nachgewaschen und bei 120°C getrocknet. Man erhält 3510 g eines braunschwarzen Pulvers.

500 g des Pulvers werden etwa 30 Minuten auf 250 bis 260°C erhitzt. Man erhält 405 g eines braunschwarzen Pulvers (Träger (1)).

100 g des homogenisierten Trägers (1) werden in 500 ml Wasser aufgeschlämmt und bei Raumtemperatur unter Rühren mit einer Lösung von 2,48 g Rutheniumchlorid-hydrat (Ru-Gehalt: 40,3%) in 200 ml 0,05 n-HCl versetzt. Anschließend werden im Laufe von etwa 5 Minuten etwa 140 ml n-Natronlauge bis zu einem pH-Wert von 9 bis 10 zugetropft. Nach fünfstündigem Nachrühren wird der Katalysator abgetrennt, mit 0,1-normaler Natronlauge chloridfrei gewaschen, abgetrennt und bei 110°C getrocknet (Katalysator (1a)).

In entsprechender Weise erhält man die Katalysatoren (1b) bis (1d), indem man nach der Abscheidung des Rutheniums statt mit 0,1 normaler Natronlauge mit 0,2- bis 1,0-normaler Natronlauge wäscht, dann wie oben beschrieben die Katalysatoren abtrennt und bei 110°C trocknet:

TABELLE 1

| Katalysator | (1a) | (1b) | (1c) | (1d) |
|---|---|---|---|---|
| Konzentration der verwendeten NaOH | 0,1 n | 0,2 n | 0,3 n | n |
| Anal.: Ru (%) | 1,0 | 1,0 | 1,0 | 1,0 |
| $Na_2O$ (%) | 0,6 | 1,4 | 2,4 | 5,1 |
| Mn (%) | ← 32,0 → | | | |
| Cr (%) | ← 29,0 → | | | |

Beispiel 2

Eine Lösung von 2416 g $MnSO_4.H_2O$ in 15 l Wasser wird in der in Beispiel 1 beschriebenen Weise zunächst mit 2040 g $Na_2CO_3$ in 8 l Wasser versetzt.

Anschließend wird der ausgefallene Niederschlag abgesaugt, sulfatfrei gewaschen, in 8 l 95°C heißem Wasser suspendiert und nach Zugabe einer heißen Lösung von 4320 g $(NH_4)_2Cr_2O_7$ in 5,6 l Wasser 4 Stunden bei 90 bis 95°C gerührt. Man läßt erkalten, trennt den dunklen Niederschlag ab und trocknet ihn bei 120°C. Man erhält 2820 g eines braunschwarzen Pulvers.

Dieses Pulver wird in etwa 560-g-Portionen in einer Apparatur, die eine langsame, gleichmäßige Bewegung des Pulvers ermöglicht, in etwa 30 bis 40 min auf 300°C erhitzt.

Man erhält 2145 g eines braunschwarzen Pulvers, das in einer Kugelmühle mit 64 g Graphit vermahlen und dann zu 3-mm-Tabletten verpreßt wird (Träger(2)).

100 g des Trägers (2) werden in einer auf 110—120°C beheizten Dragiertrommel im Laufe von jeweils 30 min. zunächst mit einer Lösung von 1,24 g $RuCl_3.X\ H_2O$ (40,4% Ru) in 40 ml 0,1 norm. HCl und anschließend mit 40 ml 4-normaler Natronlauge in dem Maße besprüht, wie das Lösungsmittel verdampft. Anschließend wird der Katalysator nach dem Erkalten mit 0,2-norm. Natronlauge chloridfrei gewaschen und getrocknet (Katalysator (2a)).

In entsprechender Weise erhält man die Katalysatoren (2b) bis (2f), wenn man den Katalysator statt mit 0,2-norm. Natronlauge mit norm. NaOH, 2-norm, NaOH, norm. KOH, 0,5- norm. KOH und norm LiOH wäscht.

Zum Vergleich wird eine weitere Katalysator-Charge statt mit 0,2-norm. Natronlauge mit Wasser gewaschen (Katalysator (2g)).

TABELLE 2

| Katalysator | (2a) | (2b) | (2c) | (2d) | (2e) | (2f) | (2g) |
|---|---|---|---|---|---|---|---|
| Waschflüss. | 0,2n Natronlauge | n Natronlauge | 2n Natronlauge | n Kalilauge | 0,5n Kalilauge | n LiOH | $H_2O$ |
| Anal.: Ru (%) | 0,5 | 0,5 | 0,5 | 0,5 | 0,5 | 0,5 | 0,5 |
| Alkelioxid (%) | 0,4 | 1,9 | 3,7 | 2,6 | 1,3 | 1,1 | |
| Mn (%) | ← 30,3 → | | | | | | |
| Cr (%) | ← 27.0 → | | | | | | |

Beispiel 2 g ist nicht gemäß der Erfindung, sondern zu Vergleichszwecken durchgeführt worden.

Beispiel 3

84,6 g $MnSO_4H_2O$ und 63,0 g $(NH_4)Cr_2O_7$ werden in 730 ml Wasser gelöst und unter Rühren im Laufe von 10 min. mit 125 ml 6-norm. $NH_3$ versetzt. Man rührt 30 min. nach, trennt den Niederschlag ab, wäscht ihn sulfatfrei und trocknet ihn bei 110°C. Man erhält 97 g eines schwarzbraunen Pulvers.

86 g des Pulvers werden in 60 min. auf 300°C erhitzt. Man erhält 68,0 g eines schwarzbraunen Pulvers (Träger 3).

Analyse: Mn: 32,6% Cr: 29,1%

10,0 g des Trägers (3) werden in 50 ml Wasser aufgeschlämmt, unter Rühren zunächst mit einer Lösung von 248 mg $RuCl_3.xH_2O$ (40,3% Ru) in 20 ml 0,02 n-HCl, dann mit 12,8 ml n-Natronlauge versetzt. Man läßt 60 min. nachrühren, trennt den Kat. ab und wäscht ihn mit 0,1 n-Natronlauge chloridfrei und trocknet ihn bei 120°C. Man erhält 10,1 g Produkt (Katalysator (3)).

Analyse: Ru: 0,95% $Na_2O$: 0,3%.

Beispiel 4

Zu einer Lösung von 84,6 g $MnSO_4.H_2O$ in 400 ml Wasser werden bei Raumtemperatur unter Rühren zunächst in 10 min. eine Lösung von 97,1 g $K_2CrO_4$ in 330 ml Wasser, in weiteren 10 min. 125 ml 2 n-Kalilauge zugegeben. Man läßt 30 min. nachrühren, trennt den schwarzbraunen Niederschlag ab und wäscht ihn mit Wasser sulfatfrei. Man erhält nach dem Trocknen 104 g eines braunschwarzen Pulvers.

89 g des Produktes werden in 60 min auf 300°C erhitzt. Man erhält 81 g eines braunschwarzen Pulvers (Träger (4)).

Analyse: Mn: 25,6% Cr: 24,7% $K_2O$: 12,2%

10,0 g des Trägers (4) werden in 50 ml Wasser aufgeschlämmt und unter Rühren nunächst mit einer Lösung von 248 mg $RuCl_3.XH_2O$ (40,3% Ru) in 20 ml 0,02-norm. Salzsäure, anschließend im Laufe von 10 min mit 30 ml n-Natronlauge versetzt. Man läßt 60 min nachrühren, wäscht den Katalysator chloridfrei und trocknet (Katalysator (4)).

Beispiel 5

Zu einer Lösung von 84,6 g $MnSO_4.H_2O$ in 400 ml Wasser werden unter Rühren nacheinander eine Lösung von 81,0 g $Na_2CrO_4$ in 330 ml Wasser und 125 ml 2-n-Natronlauge gegeben. Man rührt 30 min. nach, trennt den Niederschlag ab und wäscht ihn sulfatfrei. Nach dem Trocknen erhält man 80,6 g schwarzen Filterkuchen.

71 g des Produktes werden in 60 min auf 330°C erhitzt. Man erhält

50 g schwarzes Pulver (Träger (5)).

Analyse: Mn: 22,5% Cr: 37,8% $Na_2O$: 0,9%

10,0 g des Trägers (5) werden in 50 ml Wasser suspendiert, nacheinander mit 348 mg $RuCl_3.XH_2O$ (40,3% Ru) in 20 ml 0,02 n-HCl und 18 ml n-NaOH versetzt. Man läßt 60 min. nachrühren, trennt den Kat. ab, wäscht ihn chloridfrei und trocknet ihn. Man erhält 10,1 g (Katalysator (5)).

Beispiel 6

Zu einer Lösung von 84,6 g $MnSO_4$, $H_2O$ in 300 ml Wasser werden unter Rühren zunächst in 10 min. eine Lösung von 50,0 g $CrO_3$ in 250 ml Wasser und in weiteren 10 min. eine Lösung von 300 g LiOH in 300 ml Wasser gegeben. Nach 30 min. wird der dunkle Niederschlag abgetrennt, sulfatfrei gewaschen und getrocknet. Menge: 94 g.

86 g des Produktes werden in 60 min auf 340°C erhitzt. Man erhält

58 g des Träger (6)).

Analyse: Mn: 39,5% Cr: 23,3% $Li_2O$: 0,34%

10,0 g des Trägers (6) werden in der im Besp. 5 beschriebenen Weise mit 248 mg $RuCl_3.XH_2O$ (40,4% Ru) in 20 ml 0,02 n-HCl und 14 ml n-NaOH behandelt.

Man erhält 10,0 g (Katalysator (6)).

Beispiel 7

84,6 g $MnSO_4.H_2O$ und 63,0 g $(NH_4)_2Cr_2O_7$ werden in Z ml Wasser gelöst und bei Raumtemperatur unter Rühren in 10 min. mit einem Gemisch von Y ml 2 n-KOH und X ml 6 n-$NH_3$ versetzt. Man läßt 30 min. nachrühren, saugt ab, wäscht sulfatfrei und trocknet. Die Filterkuchen W werden in jeweils 60 min. auf 310°C erhitzt. Man erhält die Träger (7a) bis (7d) und aus diesen in der im Beispiel 5 beschriebenen Art die Katalysatoren (7a) bis (7d).

TABELLE 3

| | | | | |
|---|---|---|---|---|
| Z (ml Wasser) | 570 | 650 | 740 | 760 |
| Y (ml 2 n-KOH) | 250 | 125 | 50 | 25 |
| X (ml 6 n-$NH_3$) | 41,4 | 83,3 | 108,3 | 116,7 |
| W (g) | 98 | 108 | 115 | 97 |
| Trager | (7a) | (7b) | (7c) | (7d) |
| Analyse: Mn (%) | 28,7 | 32,2 | 32,0 | 33,2 |
| Cr (%) | 25,7 | 27,0 | 28,9 | 29,7 |
| $K_2O$ (%) | 7,1 | 4,8 | 2,2 | 1,2 |
| Katalysator | (7a) | (7b) | (7c) | (7d) |
| Analyse: Ru (%) | 1,0 | 1,0 | 1,0 | 1,0 |

### Beispiel 8

Zu einer Lösung von 1015 g $MnSO_4.H_2O$ und 756 g $(NH_4)_2Cr_2O_7$ in 6840 ml Wasser läßt man bei Raumtemperatur unter Rühren in 40 min. ein Gemisch von 2000 ml 2n-Kalilauge und 500 ml 6n-Ammoniaklösung einfließen. Man läßt 2 Stunden nachrühren, saugt, ab, wäscht den Filterkuchen sulfatfrei und trocknet ihn bei 120°C.

Man erhält 994 g einen braunscharzen Pulvers, das in einer Appartur, die ein langsames Rühren des Pulvers zuläßt, 45 min auf 300°C erhitzt wird.

Man erhält 830 g Träger (8).

Analyse: Mn: 31,5% Cr: 23,4% $K_2O$: 4,7%.

800 g des Trägers (8) werden mit 24 g Graphit vermischt und zu 3mm-Tabletten verformt. 750 g der so erhaltenen Tabletten werden denn in einer auf 120°C beheizten Dragiertrommel im Laufe von etwa 60 min. nacheinder in dem Maße mit einer Lösung von 9,9 g $RuCl_3.xH_2O$ (38,0% Ru) in 300 ml 0,1 n-HCl und mit 300 ml 4n-Kalilauge besprüht, wie das Lösungsmittel verdampft.

Anschließend wird der Katalysator nach dem Erkhalten mit n-Kalilauge chloridfrei gewaschen und getrocknet. Katalysator (8). Alkaligehalt des Katalysators: 5,7% $K_2O$.

### Beispiel 9 (Verwendung)

Je 100 g 4,4'-Diamino-diphenylmethan werden in einem autoklaven im Druckbereich von 200 bis 280 bar bei Temperaturen zwischen 250 und 280°C mit den in nachstehender Tabelle aufgeführten pulverförmigen Katalysatoren bis zur Beendigung der Wasserstoffaufnahme hydriert. Man erhält dabei die dort aufgeführten Ergebnisse.

TABELLE 4

| Katalysator<br>Nr. Zusammensetzung | Menge (g) | Hydr. Temp. (°C) | Hydr.-Zeit (°C) | Neben-prod. | Ausbeute (%) | |
|---|---|---|---|---|---|---|
| | | | | | 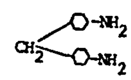 | Dest. ruckstand |
| 1a Ru(1%)-Cr-Mn-Na | 0,5 | 250 | 63 | 0,9 | 98,4 | 0,7 |
| 1b Ru(1%)-Cr-Mn-Na | 0,5 | 250 | 68 | 0,8 | 98,6 | 0,6 |
| 1c Ru(1%)-Cr-Mn-Na | 0,5 | 250 | 72 | 0,7 | 98,3 | 1,0 |
| 1d Ru(1%)-Cr-Mn-Na | 0,5 | 250 | 82 | 1,0 | 98,0 | 1,0 |
| 1b Ru(1%)-Cr-Mn-Na | 0,2 | 250 | 185 | 0,7 | 98,3 | 1,0 |
| 1a Ru(1%)-Cr-Mn-Na | 0,1 | 280 | 540 | 1,2 | 96,8 | 2,0 |
| 3 Ru(0,95%)-Cr-Mn-K | 0,5 | 250 | 75 | 0,6 | 98,3 | 1,1 |
| 4 Ru(1%)-Cr-Mn-K | 0,5 | 250 | 130 | 0,8 | 97,7 | 1,5 |
| 5 Ru(1%)-Cr-Mn-Na | 0,5 | 250 | 90 | 1,2 | 98,2 | 0,6 |
| 6 Ru(1%)-Cr-Mn-Li | 0,5 | 250 | 95 | 1,3 | 96,6 | 2,1 |
| 7a Ru(1%)-Cr-Mn-K | 0,5 | 250 | 90 | 0,6 | 98,8 | 0,6 |
| 7b Ru(1%)-Cr-Mn-K | 0,5 | 250 | 85 | 0,8 | 98,2 | 1,0 |
| 7c Ru(1%)-Cr-Mn-K | 0,5 | 250 | 105 | 0,9 | 98,3 | 0,8 |
| 7b Ru(1%)-Cr-Mn-K | 0,1 | 280 | 690 | 1,1 | 97,1 | 1,8 |
| Vergleichsversuch: Kat. (1b) der DT—OS 2502894 | 0,1 | 280 | 1920 | 2,0 | 94,2 | 3,8 |

Beispiel 10 (Verwendung)

Zur schnellen Prüfung von stückigen Katalysatoren auf ihre Eignung für das Riesel-Verfahren wurde folgende Anordnung gewählt.

In einem 250 ml-Schüttelautoklaven, der im Inneren mit einem zentral gelagerten, fest mit dem Autoklaven verbundenen Siebkorb ausgestattet ist, in den jeweils 9,0 g der zu prüfenden stückigen Katalysatorprobe so eingefüllt sind, daß eine Bewegung der Katalysatorkörner gegeneinander nicht erfolgen kann, werden nacheinander unter Standardbedingungen (250°C, 200—280 bar) mit je 90 g Diaminodiphenylmethan eine Reihe von Hydrierungen durchgeführt, wobei beim Ersatz des jeweiligen Hydrierungsproduktes gegen das Ausgangsprodukt der Katalysator unter hohem $H_2$-Druck und hoher Temperatur verbleibt, so daß eine rasche Folge von Hydrierungen möglich ist.

In Tabelle 5 sind die Ergebnisse dieses Katalysatortests zusammengestellt. Wie hieraus zu ersehen ist, weisen die Hydrierungen mit den Alkaliverbindungen enthaltenden Katalysatoren 2a bis 2f und 8 gegenüber dem Katalysator 2 g (nicht erfindungsgemäß) deutlich bessere Ausbeuten, verbunden mit geringer Nebenproduktbildung auf.

TABELLE 5

| Katalysator | | Hydr. Nr. | Hydr. zeit (min) | Ausbeute (%) | | |
|---|---|---|---|---|---|---|
| Nr. | Zusammensetzung | | | Neben-prod. | 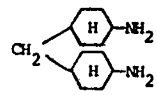 | Dest. Ruck |
| 2a | Ru(0,5)-Cr-Mn-Na | 2 | 90 | 3,1 | 92,4 | 4,5 |
| | | 4 | 80 | 3,2 | 92,0 | 4,7 |
| | | 6 | 90 | 1,6 | 92,4 | 4,0 |
| | | Ø | 88 | 3,2 | 92,5 | 4,3 |
| 2b | Ru(0,5)-Cr-Mn-Na | 2 | 100 | 4,1 | 92,5 | 3,4 |
| | | 4 | 85 | 3,7 | 92,3 | 3,8 |
| | | 6 | 85 | 3,4 | 93,1 | 3,4 |
| | | Ø | 90 | 3,7 | 93,0 | 3,3 |
| 2c | Ru(0,5)-Cr-Mn-Na | 2 | 100 | 4,4 | 94,1 | 1,3 |
| | | 4 | 125 | 3,7 | 94,0 | 2,1 |
| | | 6 | 120 | 3,6 | 93,4 | 2,9 |
| | | Ø | 111 | 4,2 | 93,6 | 2,2 |
| 2d | Ru(0,5)-Cr-Mn-K | 2 | 110 | 2,9 | 95,0 | 2,1 |
| | | 6 | 110 | 3,8 | 94,2 | 2,0 |
| | | 17 | 120 | 3,7 | 95,0 | 1,3 |
| | | Ø | 113 | 3,5 | 94,6 | 1,9 |
| 2e | Ru(0,5)-Cr-Mn-K | 2 | 85 | 4,2 | 92,4 | 3,4 |
| | | 4 | 85 | 3,6 | 94,0 | 2,4 |
| | | 6 | 95 | 3,7 | 91,7 | 5,1 |
| | | Ø | 90 | 3,8 | 92,8 | 3,4 |
| 2f | Ru(0,5)-Cr-Mn-Li | 2 | 70 | 4,2 | 91,3 | 4,5 |
| | | 4 | 80 | 3,7 | 91,3 | 4,8 |
| | | 6 | 75 | 3,9 | 90,0 | 6,1 |
| | | Ø | 77 | 4,1 | 91,2 | 4,7 |
| 2g | Ru(0,5)-Cr-Mn | 2 | 80 | 3,1 | 88,6 | 8,3 |
| | | 6 | 90 | 3,4 | 88,2 | 8,4 |
| | (nicht erfindungsgemaβ) | 17 | 94 | 3,7 | 88,3 | 8,0 |
| | | Ø | 97 | 3,0 | 89,5 | 7,5 |
| 8 | Ru(0,5)-Cr-Mn-K | 4 | 145 | 2,5 | 95,6 | 1,9 |
| | | 10 | 180 | 2,3 | 95,8 | 1,9 |
| | | 24 | 205 | 1,9 | 95,7 | 2,4 |
| | | Ø | 179 | 2,4 | 95,4 | 2,2 |

Setzt man den Versuch mit Kat. (2d) mit 2,4-Diaminotoluol fort, so erhält man folgende Ergebnisse:

| Katalysator | | Hydr. Nr. | Hydr. Zeit | Ausbeute (%) | | |
|---|---|---|---|---|---|---|
| Nr. | Bemerkungen | | | Neben-prod. | 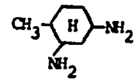 | Dest.-Ruckstand |
| 2d | gebraucht fur 27 Ansatze mit Diaminodiphenylmethan | 18–26 | 322 | 1,4 | 97,5 | 1,1 |

Beispiel 11 (Vergleichsbeispiel)

In gleicher Weise, wie in Beispiel 10 beschrieben, wird ein handelsüblicher Ru(0,5)-$Al_2O_3$-Kat. in Form von 3 mm Pellets eingesetzt (11a). In einem weiteren Versuch wird der Katalysator nach einer Behandlung mit norm. Natronlauge und Trocknung eingesetzt (11b).

Dabei werden die in Tab. 6 zusammengestellten Ergebnisse erhalten:

TABELLE 6

| Katalysator | | Hydr. Nr. | Hydr. Zeit (min) | Ausbeute (%) | | |
|---|---|---|---|---|---|---|
| Nr. | Zusammensetzung | | | Neben-prod. | 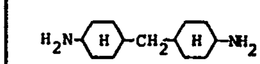 | Ruck-stand |
| 11a | Ru(0,5)–$Al_2O_3$ | 2 | 230 | 1,8 | 79,5 | 18,7 |
| | | 4 | 260 | 2,1 | 72,5 | 25,4 |
| | | 6 | 340 | 2,9 | 53,6 | 43,4 |
| | | 8 | 273 | 2,7 | 67,8 | 29,5 |
| 11b | Ru(0,5)–$Al_2O_3$–$Na_2O$(2,0%) | 2 | 130 | 1,3 | 88,7 | 10,0 |
| | | 4 | 250 | 1,5 | 88,8 | 9,7 |
| | | 6 | 320 | 1,7 | 87,5 | 10,8 |
| | | 8 | 235 | 1,6 | 88,5 | 9,9 |

Gegenüber den erfindungsgemäßen Katalysatoren weisen die handelsüblichen Katalysatoren wesentlich schlechtere Ausbeuten auf.

Außerdem tritt bei den letzteren, wie aus der raschen Zunahme der Hydrierzeit bei aufeinanderfolgenden Einsätzen zu ersehen ist, schnelle Abnahme der Katalysatoren ein.

Beispiel 12

Ein senkr. Hochdruckrohr von 70 cm Länge und 45 mm ϕ, das mit 500 ml des Ru(0,5)-Cr-Mn-$K_2O$(2,6)-Katalysators (2d) gefüllt ist, wird unter einem Wasserstoffstrom von 600 Nl/h bei einem Druck von 150 bar auf 160°C aufgeheizt. Dann wird der Druck auf 300 bar erböht, während stündlich 200 g 4,4-Diaminodiphenylmethan und 600 l Wasserstoff im Gleichstrom über den Katalysator dosiert werden. Die Reaktortemperatur wird zunächst auf 170°C und im Laufe der nächsten 45 Tage auf 180—190°C angehoben.

In der Reaktorschütting stellen sich dabei Temperaturwerte von anfangs 190—260°C ein, die im Laufe von 45 Tagen bis auf 290—300°C ansteigen. Man erhält ein farbloses Reaktionsprodukt, das bei etwa 40—43°C erstarrt. Die Zusammensetzung des Reaktionsproduktes bleibt während der genannten Betriebszeit weitgehend konstant. Es besteht zu Beginn aus 0,7% Aminodicyclohexylmethan, 98,8 Diaminodicyclohexylmethan und 0,5% Destillationsrückstand, nach 45 Tagen aus 0,9% Aminodicyclohexylmethan, 97,0% Diaminodihexylmethan und 2,1% Destillationsrückstand.

Beispiel 13 (Vergleichsversuch)

In das in Beispiel 12 beschriebene Hochdruckrohr werden 500 ml des in Beispiel 11 beschriebenen Ru(0,5)-$Al_2O_3$-$Na_2O$(2,0)-Katalysators (11b) eingebaut und dann, wie in Beispiel 12 beschrieben, verfahren. Bei einer Reaktortemperatur von 175°C une einer Katalysatorbelastung von 0,2 kg Diaminodiphenylmethan pro Ltr. Kat. und Stunde erhält man ein Reaktionsprodukt, das aus 0,9%

Aminodicyclohexylmethan, 85,5% Diaminodicyclohexylmethan, 2,5% Aminocyclohexyl-aminophenylmethan
0,9% Diaminodiphenylmethan und
10,2% Destillationsrückstand besteht.
Erhöht man die Katalysatorbelastung auf 0,4 kg Diaminodiphenylmethan pro Ltr. Kat. und Stunde, so besteht das Reaktionsprodukt aus

1,0% Aminodicyclohexylmethan

83,0% Dicyclohexylmethan

5,4% Aminocyclohexyl-aminophenylmethan

3,4% Diaminodiphenylmethan und

7% Destillationsrückstand,

Beispiel 14

4970 g eines Kondensationsproduktes aus Anilin und Formaldehyd, bestehend zu 92,9 Gew.-% aus Zweikernverbindungen (p = 1) und zu 1,9 Gew.-% aus vier- und mehrkernigen Verbindungen der Formel

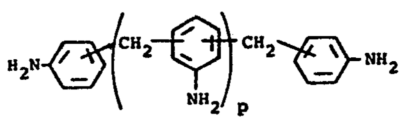 (VI)

werden in einem 10-1-Autoklaven in Gegenwart von 24,8 g des gemäß Beispiel 1 hergestellten Ru(1,0%)-Mn-Cr-Na-Katalysators (1c) bei 250°C unter einem Wasserstoffdruck von 200 bis 280 bar unter Ersatz des verbrauchten Wasserstoffs solange gerührt, bis die Wasserstoffaufnahme beendet ist. Dauer: 265 min.

Nach dem Abkühlen auf 100°C wird das Reaktionsprodukt durch Druckfiltration vom Katalysator abgetrennt, der nach einer Wäsche mit 0,3-normaler Natronlauge erneut mit 4140 g des oben beschriebenen Ausgangsproduktes bei 250°C im Druckbereich von 200 bis 280 bar mit Wasserstoff behandelt wird, bis kein Druckabfall mehr eintritt. Dauer: 280 min.

Das Reaktionsprodukt wird nach dem Abkühlen auf 100°C, wie oben beschrieben, vom Katalysator abgetrennt und mit dem ersten Hydrierungsprodukt vereinigt.

Man erhält 9660 g Hydrierungsprodukt, das zum überwiegenden Teil bei 110 bis 220°C unter einem Druck von 0,3 Torr destillierbar ist das gemäß Destillationsanalyse und gaschromatographischer Analyse sich wie folgt zusammengesetzt:

1,2 Gew.-% Aminodicyclohexylmethan und unbekannte Komponenten,

92,8 Gew.-% Diaminodicyclohexylmethan,

4,1 Gew.-% Triaminotricyclohexyldimethan,

1,9 Gew.-% Destillationsrückstand

Beispiel 15

In einem 10-Liter-Rührautoklaven werden nacheinander 5 Hydierungen durchgeführt. Dabei werden die in der nachstehenden Tab. 7 angeführten Mengen eines Kondensationsproduktes aus Anilin und Formaldehyd eingesetzt, das zu 72 Gew.-% aus Zweikernverbindungen (p = 0), zu 17 Gew.-% aus Dreikernverbindungen (p = 1) und zu 11 Gew.-% aus vier- und höherkernigen Verbindungen der Formel VI (gemäß Beispiel 14) besteht und das noch kleine Mengen Anilin, Wasser und Natriumchlorid enthält.

Die Hydrierungen werden bei 250°C unter einem Wasserstoffdruck von 200 bis 280 bar unter Zusatz der in der Tab. 7 genannten Mengen dies gemäß Beispiel 1 hergestellten Ru(1,0%)-Mn-Cr-Na-Katalysators (1b) durchgeführt, wobei der jeweils für den vorhergehenden Ansatz gebrauchte Katalysator nach der Abtrennung vom Hydrierungsprodukt erneut eingesetzt wird.

TABELLE 7

| Hydrier- | Ausgangsprodukt (g) | Kat.-Menge (g) | Hydrierzeit (min) |
|---|---|---|---|
| 1 | 4030 | 20 | 570 |
| 2 | 4635 | 13 | 520 |
| 3 | 4050 | 12 | 525 |
| 4 | 4210 | 10 | 450 |
| 5 | 4000 | 8 | 468 |

Man erhält insgesamt 21982 g Hydrierungsprodukt als fast farblose, etwas viskose Flüssigkeit. Bei der Destillation des Hydrierungsproduktes erhält man 19420 g eines bei 100 bis 220°C unter einem Druck von 3 Torr siedenden Destillates, das sich gemäß gaschromatographischer Analyse wie folgt zusammensetzt:

1,3 Gew.-% Cyclohexylamin, Aminodicyclohexylmethan

80,3 Gew.-% Diaminodicyclohexylmethan

18,4 Gew.-% Bis-(aminocyclohexylmethan)-cyclohexylamin

sowie 2562 g eines aus vier- und mehrkernigen cycloaliphatischen Poly-aminen bestehenden Destillationsrückstandes.

Beispiel 16

Verfährt man wie im Beispiel 15 beschrieben, setzt aber statt dessen als Ausgangsprodukt die in Tab. 8 genannten Mengen eines Kondensationsproduktes aus Anilin und Formaldehyd ein, das zu 62 Gew.-% aus Zweikernverbindungen (p = 0), zu 18 Gew.-% aus Dreikernverbindungen (p = 1) und zu 20 Gew.-% aus vier- und mehrkernigen Verbindungen der Formel VI (gemäß Beispiel 14) besteht.

TABELLE 8

| Hydrier-ansatz | Ausgangsprodukt (g) | Kat.-Menge (g) | Hydrierzeit (min) |
|---|---|---|---|
| 1 | 4110 | 20 | 570 |
| 2 | 4440 | 13 | 465 |
| 3 | 4190 | 12 | 385 |
| 4 | 4030 | 12 | 330 |
| 5 | 3840 | 8 | 385 |

so erhält man nach 5 Hydrieransätzen insgesamt 20480 g Hydrierungsprodukt in Form einer fast farblosen, etwa viskosen Flüssigkeit.

Das Hydrierungsprodukt setzt sich gemäß Destillationsanalyse und gaschromatographischer Analyse des destillierbaren Anteils wie folgt zusammen:

1,0 Gew.-% Aminodicyclohexylmethan und Spuren anderer Verbindungen

61,0 Gew.-% Diaminodicyclohexylmethan

17,8 Gew.-% Bis-(aminocyclohexylmethyl)-cyclohexylamin

20,3 Gew.-% vier- und mehrkernige cycloaliphatische Polyamine.

Beispiel 17

In ein senkrechtes Hochdruckrohr von 70 cm Länge und 45 mm Durchmesser, das mit 500 ml des nach Beispiel 2 hergestellten Ru (0,5%)-Mn-Cr-$K_2O$ (2,6%) Katalysators (2d) gefüllt ist, werden im Anschluß an die im Beispiel 12 beschriebene Betriebszeit von 45 Tagen statt 4,4'-Diaminodiphenylmethan stündlich 200 g eines Kondensationsproduktes aus Anilin und Formaldehyd, bestehend zu 89 Gew.-% aus Zweikernverbindungen (p = o), zu 8,2 Gew-% aus Dreikernverbindungen (p = 1) und zu 2,8 Gew.-% aus vier- und mehrkernigen Verbindungen der Formel VI (gemäß Beispiel 14) eindosiert.

Gleichzeitig werden stündlich 600 Nl Wasserstoff bei einem Druck von 300 bar über den Katalysator geleitet. Die Reaktortemperatur wird auf 200°C gehalten. In der Katalysatorschüttung stellen sich dabei Temperaturen von etwa 240 bis 300°C ein.

Man erhält stündlich 212 g eines farblosen Hydrierungsproduktes, das sich im Mittel wie folgt zusammensetzt:

1,3 Gew.-% Aminodicyclohexylmethan und Spuren unbek. Verbindungen

87,1 Gew.-% Diaminodicyclohexylmethan

7,5 Gew-% Bis-(aminocyclohexylmethyl)-cyclohexylamin

4,1 Gew.-% Destillationsrückstand, bestehend aus vierund mehrkernigen Polyaminen.

Nach einer Betriebszeit von 30 Tagen, während der die Temperatur in der Katalysatorschüttung um etwa 10°C angehoben wurde, erhält man im Mittel ein Reaktionsprodukt, das sich wie folgt zusammensetzt:

2,6 Gew.-% Aminodicyclohexylmethan und Spuren unbek. Verbindungen

85,4 Gew.-% Diaminodicyclohexylmethan

7,6 Gew.-% Bis-(aminocyclohexylmethyl)-cyclohexylamin

4,4 Gew.-% Destillationsrückstand.

**Patentansprüche**

1. Ruthenium-Trägerkatalysator auf der Basis von Hydroxiden und/oder Oxidhydraten des Chroms und Mangans und/oder deren Dehydratisierungsprodukten als Katalysatorträger, dadurch gekennzeichnet, daß der Katalysator Alkali-oxide, -hydroxide, -alkoholate, -carbonate, -hydrogencarbonate, Alkalisalze niederer Carbonsäuren mit bis zu 7 C-Atomen und/oder deren Umsetzungsprodukte mit den im Katalysator enthaltenen Chrom- und Manganverbindungen enthält und wobei der Gehalt an Alkaliverbindungen als Oxide gerechnet, 0,05 bis 15 Gew.-% beträgt.

2. Verfahren zur Herstellung eines Ruthenium-Trägerkatalysators auf der Basis von Hydroxiden und/oder Oxidhydraten des Chroms und Mangans und/oder deren Dehydratisierungsprodukten als Katalysatorträger gemäß Anspruch 1, dadurch gekennzeichnet, daß der Katalysator mit einer Lösung von Alkalioxiden, -hydroxiden, -alkoholaten, -carbonaten, -hydrogencarbonaten und/oder Alkalisalzen niederer Carbonsäuren mit bis zu 7 C-Atomen behandelt wird, und wobei die Konzentration der Alkaliverbindungen in der Lösung 0,02 bis 5-n beträgt.

3. Verfahren nach Anspruch 2, dadurch gekennzeichnet, daß man als Katalysatorträger ein durch Erhitzen eines Ammonium-mangan-chromates auf 200 bis 450°C gewonnenes Produkt verwendet.

4. Verfahren zur Herstellung eines Ruthenium-Trägerkatalysators auf der Basis von Hydroxiden und/oder Oxidhydraten des Chroms und Mangans und/oder deren Dehydratisierungsprodukten als Katalysatorträger gemäß Anspruch 1, dadurch gekennzeichnet, daß man als Katalysatorträger ein durch Erhitzen eines gemischten Alkali-ammonium-mangan-chromates auf 200 bis 450°C gewonnenes Produkt verwendet.

5. Verwendung des Katalysators nach Anspruch 1 zur katalytischen Hydrierung aromatischer Amine.

6. Verwendung nach Anspruch 5, dadurch gekennzeichnet, daß man aromatische Amine der Formel

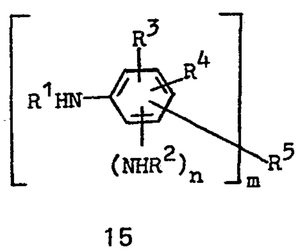

in der

$R^1$, $R^2$, $R^3$ und $R^4$ gleich oder verschieden sind und für Wasserstoff oder einen Alkylrest stehen,

n für die Zahlen 0 oder 1 und

m für die Zahlen 1, 2 oder 3 stehen sowie

$R^5$ je nach der Bedeutung von m für Wasserstoff oder einen gegebenenfalls substituierten ein-, zwei-oder dreiwertigen aliphatischen, cycloaliphatischen, araliphatischen oder aromatischen Rest steht, katalytisch hydriert.

7. Verwendung nach Ansprüchen 5 und 6, dadurch gekennzeichnet, daß man als Ausgangsprodukt Gemische von Kondensationsprodukten von Anilin mit Formaldehyd der allgemeinen Formel

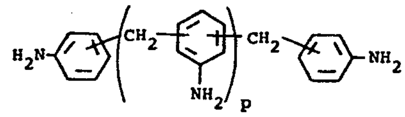

in welcher

p für die Zahlen 0 sowie 1 bis 5 steht,

ohne vorherige Auftrennung in einzelne Bestandteile, verwendet.

8. Verwendung nach Anspruch 7, dadurch gekennzeichnet, daß man ein Ausgangsprodukt verwendet, dessen Zweikernanteil (p = 0) größer als 50 Gew.-% und desen Anteil an Vier- und Mehrkernverbindungen (p = 2 bis 5) geringer als 30 Gew.-% ist.

**Claims**

1. Supported ruthenium catalyst based on hydroxides and/or hydrated oxides of chromium and manganese and/or dehydration products thereof, as the catalyst support, characterised in that the catalyst contains alkali metal oxides, hydroxides, alcoholates, carbonates, bicarbonates, alkali metal salts of lower carboxylic acids with up to 7 C atoms and/or reaction products thereof with the chromium compounds and manganese compounds contained in the catalyst, the content of alkali metal compounds, calculated as oxides, being 0.05 to 15% by weight.

2. Process for the preparation of a supported ruthenium catalyst based on hydroxides and/or hydrated oxides of chromium and manganese and/or dehydration products thereof, as the catalyst support according to Claim 1, characterised in that the catalyst is treated with a solution of alkali metal oxides, hydroxides, alcoholates, carbonates, bicarbonates and/or alkali metal salts of lower carboxylic acids with up to 7 C atoms, the concentration of the alkali metal compounds in the solution being 0.02 to 5 N.

3. Process according to Claim 2, characterised in that a product obtained by heating an ammonium manganese chromate to 200 to 450°C is used as the catalyst support.

4. Process for the preparation of a supported ruthenium catalyst based on hydroxides and/or hydrated oxides of chromium and manganese and/or dehydration products thereof, as the catalyst support according to Claim 1, characterised in that a product obtained by heating a mixed alkali metal manganese chromate to 200 to 450°C is used as the catalyst support.

5. Use of the catalyst according to Claim 1 for the catalytic hydrogenation of aromatic amines.

6. Use according to Claim 5, characterised in that aromatic amines of the formula

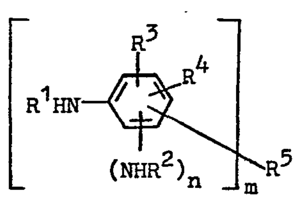

in which

$R^1$, $R^2$, $R^3$ and $R^4$ are identical or different and represent hydrogen or an alkyl radical,

n represents the numbers 0 or 1,

m represents the numbers 1, 2 or 3 and

$R^5$, depending on the meaning of m, represents hydrogen r an optionally substituted monovalent, divalent or trivalent aliphatic, cycloaliphatic, araliphatic or aromatic radical,

are subjected to catalytic hydrogenation.

7. Use according to Claims 5 and 6, characterised in that mixtures of condensation products of aniline and formaldehyde, of the general formula

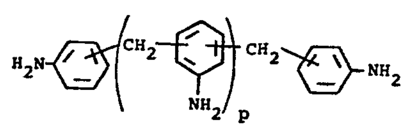

in which

p represents the numbers 0 and 1 to 5,

are used as the starting product, without prior separation into individual constituents.

8. Use according to Claim 7, characterised in that a starting product with a dinuclear content (p = 0) of more than 50% by weight and a content of compounds which are tetranuclear and more than tetranuclear (p = 2 to 5) of less than 30% by weight is used.

**Revendications**

1. Catalyseur support de ruthénium à base d'hydroxydes et/ou d'hydrates d'oxydes du chrome et du manganèse et/ou de leurs produits de déshydratation comme supports catalytiques, caractérisé en ce que le catalyseur contient des oxydes, des hydroxydes, des alcoolates, des carbonates et des hydrogénocarbonates alcalins, des sels alcalins d'acides carboxyliques inférieurs contenant jusqu'à 7 atomes de carbone et/ou leurs produits réactionnels avec les composés de chrome et de manganèse contenus dans le catalyseur, la teneur en composés alcalins étant de 0,05 à 15% en poids, calculés en oxydes.

2. Procédé de préparation d'un catalyseur support de ruthénium à base d'hydroxydes et/ou d'hydrates d'oxydes du chrome et du manganèse et/ou de leurs produits de déshydratation comme supports catalytiques suivant la revendication 1, caractérisé en ce qu'on traite le catalyseur avec une solution d'oxydes, d'hydroxydes, d'alcoolates, de carbonates et d'hydrogénocarbonates alcalins et/ou de sels alcalins d'acides carboxyliques inférieurs contenant jusqu'à 7 atomes de carbone, la concentration des composés alcalins dans la solution étant de 0,02 à 5N.

3. Procédé suivant la revendication 2, caractérisé en ce que, comme support catalytique, on utilise un produit obtenu par chauffage d'un chromate d'ammonium-manganèse à une température de 200 à 450°C.

4. Procédé de préparation d'un catalyseur support de ruthénium à base d'hydroxydes et/ou d'hydrates d'oxydes du chrome et du manganese et/ou de leurs produits de déshydratation comme supports catalytiques suivant la revendication 1, caractérisé en ce que, comme support catalytique, on utilise un produit obtenu par chauffage d'un chromate mixte d'un métal alcalin, d'ammonium et de manganèse à une température de 200 à 450°C.

5. Utilisation du catalyseur suivant la revendication 1 pour l'hydrogenation catalytique d'amines aromatiques.

6. Utilisation suivant la revendication 5, caractérisée en ce qu'on soumet, à une hydrogénation catalytique, des amines aromatiques répondant à la formule:

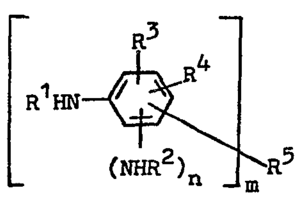

dans laquelle

$R^1$, $R^2$, $R^3$ et $R^4$ sont identiques ou différentes et représentent chacun un atome d'hydrogène ou un groupe alkyle,

n représente les nombres 0 ou 1, et

m représente les nombres 1, 2 ou 3, et

$R^5$ représente, suivant la valeur de m, un atome d'hydrogène ou un radical aliphatique, cycloaliphatique, araliphatique ou aromatique monovalent, bivalent ou trivalent et éventuellement substitué.

7. Utilisation suivant, l'une quelconque des revendications 5 et 6, caractérisée en ce que, comme de condensation d'aniline avec du formaldéhyde de formule générale:

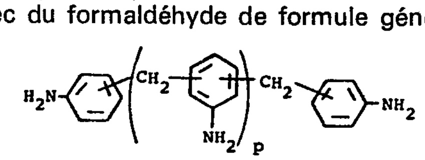

dans laquelle

p représente les nombres 0 et 1 à 5,

sans séparation préalable en constituants individuels.

8. Utilisation suivant la revendication 7, caractérisée en ce qu'on utilise un produit de départ dont la fraction à deux noyaux (p = 0) est supérieure à 50% en poids et dont la fraction en composés à quatre noyaux et plus (p = 2 à 5) est inférieure à 30% en poids.